Europäisches Patentamt

**European Patent Office**

**Office européen des brevets**

(11) Numéro de publication: **0 326 515**
A1

# (12) DEMANDE DE BREVET EUROPEEN

(21) Numéro de dépôt: **89810037.5**

(51) Int. Cl.4: **H 04 N 1/387**

(22) Date de dépôt: **17.01.89**

(30) Priorité: **18.01.88 CH 155/88**

(43) Date de publication de la demande:
**02.08.89 Bulletin 89/31**

(84) Etats contractants désignés:
**AT BE DE ES FR GB GR IT LU NL SE**

(71) Demandeur: **ALPORT HOLDING INC.**
**c/o Morgan y Morgan Calle 53 Urbanizacione Obarrio**
**Torre Bancosur, Piso 16**
**Panama (PA)**

(72) Inventeur: **Wahl, Francis**
**Rue Robert-de-Traz 1**
**CH-1206 Genève (CH)**

(74) Mandataire: **Charbonnier, Georges R.**
**8, Avenue Peschier**
**CH-1206 Genève (CH)**

(54) **Installation photo-vidéo.**

(57) L'installation photo-vidéo permet d'imprimer ou de transférer une image complexe, par exemple un sujet fondu dans un décor et/ou accompagné d'un texte, sur une carte vierge.

L'installation comprend une caméra-vidéo (V), un écran TV (E), une mémoire vidéo (M), une banque de données (B), un ordinateur (O), une copieuse vidéo à haute-définition (I), un magasin (N) contenant un stock de cartes vierges, et un dispositif de commande et de contrôle multifonction (S), le tout de manière qu'un utilisateur puisse, au moyen de ces éléments, visualiser l'image d'un sujet, enregistrer une photo de cette image, choisir un décor et/ou un texte parmi un certain nombre de décors et de textes, réaliser une image complexe de la photo enregistrée et du décor et/ou du texte choisis, visualiser cette image complexe, et l'imprimer ou la transférer sur une carte du stock

FIG. 1

EP 0 326 515 A1

## Description

### INSTALLATION PHOTO-VIDEO

La présente invention a pour objet une installation photo-vidéo permettant d'imprimer ou transférer une image complexe, par exemple un sujet fondu dans un décor et/ou accompagné d'un texte, sur un support conventionnel tel qu'une carte vierge, un film, un diapo, etc.

Cette installation, qui peut être entièrement ou partiellement automatique, est définie par la revendication 1.

Le dessin annexé représente, à titre d'exemple non limitatif, une forme d'exécution de l'objet de l'invention permettant à ses utilisateurs d'obtenir, en quelques minutes, des cartes personnalisées, par exemple des cartes de voeux ou des cartes de visite avec une photo.

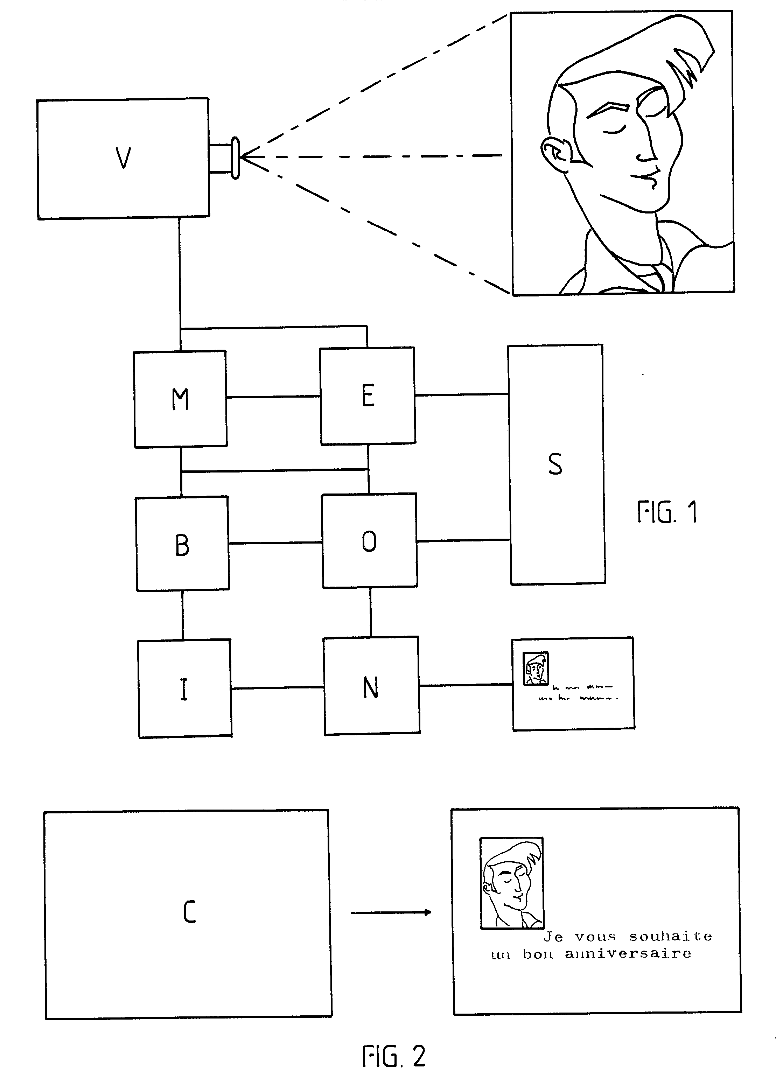

La figure 1 est un schéma-bloc de l'installation.

La figure 2 montre une carte vierge et cette même carte imprimée selon la volonté de l'utilisateur.

L'installation représentée comprend une caméra-vidéo V, un écran TV E, une mémoire-vidéo M, une banque de données B, un ordinateur O, une copieuse-vidéo couleur I à haute définition, un magasin N de cartes vierges C, et un dispositif de commande et de contrôle S.

La caméra-vidéo V est destinée à la prise de vue du sujet que l'utilisateur désire voir figurer sur sa carte de voeux personnalisée, dans le cas illustré, son propre portrait, et la mémoire-vidéo M à enregistrer une photo-vidéo à partir de l'image-vidéo.

La banque B met à disposition de l'utilisateur une série de décors et/ou de textes, notamment des formules de voeux, susceptibles d'être associés à la photo-vidéo enregistrée.

L'ordinateur O est programmé de manière à permettre à l'utilisateur de choisir une décor et/ou un texte parmi ceux qui sont disponibles dans la banque B, de réaliser une image complexe de la photo-vidéo en mémoire et du décor et/ou du texte choisis.

L'écran E permet à l'utilisateur de visualiser d'une part l'image de la caméra-vidéo et d'autre part cette image complexe, en l'occurence l'image constituée par le portrait de l'utilisateur et par le texte de voeux.

La copieuse I permet de transférer l'image complexe sur une carte C du magasin N.

Le dispositif multi-fonction S permet à l'utilisateur de régir l'installation selon le processus suivant : L'utilisateur se place devant l'objectif de la caméra V et voit son portrait sur l'écran E.

Lorsqu'il juge que son image est bonne, il agit sur une touche du dispositif S qui commande l'enregistrement d'une photo-vidéo dans la mémoire M.

Par l'intermédiaire d'une autre touche du même dispositif S, il choisit un texte et/ou un décor, en l'occurence uniquement un texte de voeux.

Automatiquement l'ordinateur forme sur l'écran E une image composée de l'image en mémoire et du texte de voeux.

Au moyen d'une ou plusieurs autres touches du dispositif S, l'utilisateur peut traiter cette image complexe s'il souhaite la modifier, par exemple agrandir ou réduire son portrait, modifier les emplacements de la photo et du texte, etc. etc.

Lorsque l'image lui donne satisfaction, il commande, en agissant toujours sur une touche ad hoc du dispositif S, le transfert de l'image compexe sur une carte C par l'entremise de la copieuse I L'utilisateur peut imprimer de la sorte une seule carte ou une série de cartes s'il le désire dans un laps de temps très court en faisant intervenir un dispositif de tirage numérique.

L'installation décrite pourra être soit intégrée à une cabine, par exemple une cabine publique à prépaiement, soit située dans un lieu privé ou commercial.

L'invention n'est évidemment pas limitée à la forme d'exécution représentée au dessin et décrite ci-dessus.

En particulier elle pourrait, en regard de cette forme d'exécution, être simplifiée ou perfectionnée.

Notamment, l'installation pourrait être agencée de manière que l'image du sujet puisse être, au choix de l'utilisateur, soit une photo-vidéo prise par la caméra-vidéo, soit une image existante, par exemple une photo, un dessin, une reproduction, etc.

De la même façon, le décor et/ou le texte pourrait être mis à disposition par l'utilisateur lui-même.

Enfin, la caméra-vidéo pourrait être remplacée par un scanner.

### Revendications

1 - Installation photo-vidéo permettant d'imprimer ou de transférer une image complexe, par exemple un sujet fondu dans un décor et/ou accompagné d'un texte, sur un support conventionnel tel, par exemple, une carte vierge, un film, un diapo, etc, caractérisée par le fait qu'elle comprend une caméra-vidéo ou un scanner (V), un écran TV (E), une mémoire-vidéo (M), une banque de données (B), un ordinateur (O), une copieuse-vidéo (I) à haute-définition, un magasin (N) de supports conventionnels (C), et un dispositif de commande et de contrôle multifonctions (S), le tout de manière qu'un utilisateur puisse, au moyen de ces éléments, visualiser l'image d'un sujet, enregistrer une photo de cette image, choisir un décor et/ou un texte parmi un certain nombre de décors et de textes, réaliser une image complexe de la photo enregistrée et du décor et/ou du texte choisis, visualiser cette image complexe et l'imprimer ou la transférer sur un support conventionnel.

2 - Installation selon la revendication 1, caractérisée par le fait que ledit ordinateur (O) est programmable de manière que l'on puisse traiter l'image complexe.

3 - Installation selon la revendication 1, caractérisée par le fait qu'elle est agencée de manière que l'on puisse mettre en mémoire une image existante, par exemple une photographie déjà réalisée, un dessin, une reproduction, etc.

Installation selon la revendication 1, caractérisée par le fait qu'elle est agencée de manière que l'on puisse réaliser une image complexe dans laquelle le décor et/ou le texte sont apportés par l'utilisateur, sous la forme d'une photographie, d'un dessin, d'une reproduction, etc.

FIG. 1

Je vous souhaite
un bon anniversaire

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | SIEMENS FORSCHUNGS- UND ENTWICKLUNGSBERICHTE, vol. 12, no. 1, 1983, pages 55-60, Springer Verlag, Würzburg, DE; B. BERGMANN et al.: "An experimental text-image workstation" * Page 55, left-hand column, paragraph 2 - page 56, left-hand column, line 7; page 56, right-hand column, paragraph 2 - page 60, left-hand column, line 7 * --- | 1-4 | H 04 N 1/387 |
| X | GB-A-2 078 411 (SONY) * Page 2, line 66 - page 5, line 35 * --- | 1-3 | |
| A | US-A-4 561 061 (SAKAMOTO) * Column 1, lines 14-30 * --- | 4 | |
| A | US-A-4 130 834 (MENDER) --- | | |
| A | DE-C-3 422 285 (HAMMANN) --- | | |
| A | US-A-4 052 739 (WADA) --- | | TECHNICAL FIELDS SEARCHED (Int. Cl.4) |
| A | EP-A-0 235 398 (AGFA-GEVAERT) --- | | H 04 N 1/00 |
| A | US-A-4 037 249 (PUGSLEY) ----- | | |

The present search report has been drawn up for all claims

| Place of search | Date of completion of the search | Examiner |
|---|---|---|
| THE HAGUE | 21-04-1989 | DE ROECK A.F.A. |

EPO FORM 1503 03.82 (P0401)